(19)

Europäisches
Patentamt

European
Patent Office

Office européen
des brevets

(11) **EP 4 019 980 B1**

(12) **EUROPÄISCHE PATENTSCHRIFT**

(45) Veröffentlichungstag und Bekanntmachung des
Hinweises auf die Patenterteilung:
**04.10.2023 Patentblatt 2023/40**

(21) Anmeldenummer: **20216895.1**

(22) Anmeldetag: **23.12.2020**

(51) Internationale Patentklassifikation (IPC):
***G01P 3/487*** *(2006.01)* ***G01P 3/66*** *(2006.01)*

(52) Gemeinsame Patentklassifikation (CPC):
**G01P 3/487; G01P 3/66**

(54) **VORRICHTUNG ZUM ERMITTELN VON DATEN ZUM BESTIMMEN EINER GESCHWINDIGKEIT EINES FAHRZEUGES, AUSWERTEEINRICHTUNG UND VERFAHREN HIERZU**

DEVICE FOR DETECTING DATA FOR DETERMINING THE SPEED OF A VEHICLE, EVALUATION DEVICE AND METHOD THEREFOR

DISPOSITIF DE DÉTERMINATION DES DONNÉES PERMETTANT DE DÉTERMINER UNE VITESSE D'UN VÉHICULE, DISPOSITIF D'ÉVALUATION ET PROCÉDÉ CORRESPONDANT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**29.06.2022 Patentblatt 2022/26**

(73) Patentinhaber: **K.W.H. Ciclosport Vertriebs GmbH
82152 Krailling (DE)**

(72) Erfinder:
• **Jahnen, Georg
82166 Gräfelfing (DE)**

• **Becker, Christian
82166 Gräfelfing (DE)**

(74) Vertreter: **Wunderlich & Heim Patentanwälte
Partnerschaftsgesellschaft mbB
Irmgardstraße 3
81479 München (DE)**

(56) Entgegenhaltungen:
**EP-A2- 3 435 094     EP-B1- 2 073 022
JP-A- 2014 160 009     US-A- 4 967 153
US-B2- 9 267 800**

EP 4 019 980 B1

## Beschreibung

Die Erfindung betrifft eine Vorrichtung zum Ermitteln von Daten zum Bestimmen einer Geschwindigkeit eines Fahrzeuges, beispielsweise eines Fahrrades. Hierbei ist ein Magnet vorgesehen, welcher an einem Rad des Fahrzeuges anbringbar ist und bei Rotation des Rades eine Kreisbewegung ausführt. Ferner weist die Vorrichtung eine Sensoreinrichtung zum Aufnehmen von Signalen bedingt durch die Kreisbewegung des Magneten auf. Diese kann an einem Bauteil des Fahrzeuges befestigt werden, an dem sich der Magnet vorbeibewegt, wenn dieser am Rad befestigt ist, und das Rad in Rotation gesetzt wird.

Ferner betrifft die Erfindung eine Auswerteeinrichtung zum Bestimmen einer Geschwindigkeit eines Fahrzeuges sowie ein Verfahren hierzu.

Bei einer gattungsgemäßen Vorrichtung kann es sich insbesondere um eine Vorrichtung handeln, welche im Rahmen eines Geschwindigkeitssensors für Fahrräder verwendet wird. Hierbei wird ein Magnet an das Rad des Fahrrades angebracht. Dies findet insbesondere durch ein Anbringen an einer der Speichen statt. Ferner ist eine Sensoreinheit vorgesehen, welche am Rahmen des Fahrrades befestigt wird. Hierbei wird eine Stelle ausgewählt, an der sich der Magnet bei einer Umdrehung des Rades vorbeibewegt. Herkömmliche Sensoreinheiten weisen meist einen Reed-Kontakt auf. Bei einer Umdrehung des Rades wird der Magnet an dem Reed-Kontakt vorbeigeführt, wodurch dieser schließt und so kurzzeitig ein elektrischer Stromkreis geschlossen wird. Dadurch wird ein elektrischer Impuls erzeugt. Durch Messen des Zeitabstandes zwischen Impulsen können die Zeiteinheiten $\Delta t$ pro Umdrehung des Rades ermittelt werden. Ist auch der Umfang $U$ des Rades bekannt, kann basierend auf diesen Daten die Geschwindigkeit errechnet werden:

$$v = \frac{U}{\Delta t}$$

wobei $v$ die ermittelte Geschwindigkeit, $U$ der Umfang des Rades und $\Delta t$ der Zeitabstand zwischen zwei Impulsen ist.

Üblicherweise ist der Reed-Kontakt über eine 2-Drahtleitung mit einer Auswerteeinheit verbunden, die diese Auswertung ausführt und die Geschwindigkeit beispielsweise auf einem Tacho anzeigt oder die Signale per Funk weiterleitet.

Im Zusammenhang mit den immer beliebter werdenden E-Bikes wird der Manipulationsschutz der Geschwindigkeitsmessung für Fahrräder immer wichtiger.

Entsprechend der deutschen Straßenverkehrsordnung darf beispielsweise eine Motorunterstützung der Bewegung nur bis zu einer Geschwindigkeit von 25 km/h durchgeführt werden. Werden Pedelecs verwendet, darf diese Unterstützung bis 45 km/h vorgesehen sein.

Um diese gesetzlichen Regelungen zu umgehen, sind verschiedene Methoden bekannt, wie die Geschwindigkeitsmessung manipuliert werden kann. Eine Möglichkeit besteht darin, der dem Reed-Kontakt nachgeordneten Schaltung falsche Impulse zukommen zu lassen, so kann der Steuerung eine niedrigere Geschwindigkeit vorgegaukelt werden, indem die Zeitabstände zwischen zwei Impulsen vergrößert werden. Die Signale des Reed-Kontaktes werden dann komplett unterdrückt.

Zusätzlich sind auch andere Geräte bekannt, die vor dem Reed-Kontakt, also zwischen diesem und dem Magneten, an der Sensoreinheit platziert werden. Diese Geräte schirmen entweder das Magnetfeld ab oder der Magnet wird ganz entfernt. Über das zusätzliche Gerät wird dem Reed-Kontakt in zeitlichen Abständen ein Magnetfeld auferlegt, so dass dieser schließt. Dies hat zur Folge, dass die entsprechenden Impulse erzeugt werden und in der nachgeschalteten Auswertung ausgewertet werden. Da jedoch keinerlei Realitätsbezug zu dem Schließen des Reed-Kontaktes mehr vorliegt, kann auch hier die Geschwindigkeit beliebig eingestellt werden.

Aus der EP 3 435 094 und der JP 2014 160009 A sind gattungsgemäße Geschwindigkeitsmesser, die mit einem Sensor arbeiten bekannt. Weitere Geschwindigkeitsmesser, die auf Impulsbasis arbeiten, sind in US 9 267 800 B2, US 4 967 153 A und EP 2 073 022 B1 beschrieben.

Der Erfindung liegt daher die **Aufgabe** zugrunde, eine Vorrichtung und ein Verfahren zum Ermitteln von Daten zum Bestimmen einer Geschwindigkeit eines Fahrzeuges anzugeben, welches manipulationssicherer ist.

Diese Aufgabe wird erfindungsgemäß durch eine Vorrichtung mit den Merkmalen des Anspruchs 1 sowie ein Verfahren mit den Merkmalen des Anspruchs 9 gelöst. Weitere vorteilhafte Ausführungen sind in den abhängigen Ansprüchen, der Beschreibung sowie in den Figuren und deren Beschreibung angegeben.

Entsprechend Anspruch 1 ist vorgesehen, dass die Sensoreinheit mindestens einen Sensor zum Messen einer quantitativen Magnetfeldstärkenänderung aufweist sowie dass der Sensor eingerichtet ist, die Magnetfeldstärkenänderung mit einer Tastfrequenz von mindestens 200 Hz abzutasten.

Der Erfindung liegt die Grundidee zugrunde, einen anderen Sensor als einen Reed-Sensor vorzusehen, der lediglich das Vorhandensein oder Nichtvorhandensein eines Magnetfeldes anzeigt. Entsprechend der Erfindung ist mindestens ein Sensor vorgesehen, der eine quantitative Änderung des Magnetfeldes beziehungsweise dessen Stärke ermitteln und weitergeben kann. Zusammen mit einer Abtastfrequenz von mindestens 200 Hz können so während eines Vorbeilaufens des Magneten bei einer Umdrehung des Rades mehrere Abtastwerte aufgenommen werden.

Dies bietet gegenüber herkömmlichen Systemen den Vorteil, dass auch ein Verlauf der Magnetfeldänderung abgetastet und somit aufgenommen wird. Wird dieser Verlauf ausgewertet, so kann eine Vielzahl der zuvor beschriebenen Manipulationen erkannt und damit unterbunden werden. Erfindungsgemäß sind mindestens zwei Sensoren zum Messen einer quantitativen Magnetfeldstärkenänderung vorgesehen. Erfindungsgemäß sind diese in Richtung der Kreisbewegung des Magneten, wenn dieser an dem Rad angebracht ist, angeordnet. Anders ausgedrückt sind die Sensoren derart angeordnet, dass der Magnet zuerst an dem einen Sensor und anschließend an dem weiteren Sensor vorbeigeführt wird. Dies kann selbstverständlich auch mit mehreren Sensoren durchgeführt werden.

Idealerweise sind die Sensoren so nah beieinander angeordnet, dass das Magnetfeld des Magneten von mehreren Sensoren gleichzeitig messbar ist. Dann können die Sensoren nicht unabhängig voneinander beeinflusst und damit manipuliert werden.

Durch das Erhöhen der Anzahl der Sensoren zum quantitativen Aufnehmen der Magnetfeldstärkenänderung erhöht sich die verfügbare Information über die Magnetbewegung, welche einer Auswertung zugeführt werden kann. Dies wiederum erleichtert das Erkennen von Manipulationen, da zum einen die aufgezeichneten Daten von unterschiedlichen Sensoren miteinander verglichen werden können. Wenn sich die Messbereiche der Sensoren überlappen würde eine weitere Manipulationseinrichtung, dann nicht nur einem Sensor ein Signal geben, sondern den anderen auch, so dass die Kombination der Signale aus den Sensoren nicht zueinander passt.

Grundsätzlich können verschiedene Sensoren zum Messen einer quantitativen Magnetfeldstärkenänderung eingesetzt werden. Bevorzugt werden hierfür Hall-Sensoren verwendet. Hall-Sensoren können auf Halbleiterbasis und/oder einer integrierten Schaltung aufgebaut werden, so dass sie sehr kompakt sind und wenig Platz einnehmen. Dies bietet den Vorteil, dass beispielsweise zwei oder vier Hall-Sensoren innerhalb eines Sensorgehäuses aufgenommen werden können, welches nur wenige mm beziehungsweise cm groß ist. Grundsätzlich können aber auch andere Sensoren hierfür eingesetzt werden, die eine entsprechende quantitative Auswertung von Magnetfeldänderungen mit der benötigten Abtastfrequenz ermöglichen. Wesentlich ist hierbei, dass während des Vorbeilaufens des Magneten mehrere Abtastwerte aufgenommen werden können, die eine ausreichend genaue Auflösung aufweisen, um eine Änderung des Magnetfeldes festzustellen. Hierbei ist es nicht ausreichend festzustellen, ist ein Magnetfeld vorhanden oder nicht, sondern auch die Erhöhung sowie Verringerung des jeweiligen Magnetfeldes soll festgestellt werden.

Die erfindungsgemäße Vorrichtung kann in einer Auswerteeinrichtung zum Bestimmen einer Geschwindigkeit eines Fahrzeuges, insbesondere eines Fahrrades verwendet werden. Hierzu weist die Auswertevorrichtung zusätzlich eine Auswerteeinheit zum Bestimmen der Geschwindigkeit des Fahrzeuges auf.

Die Auswerteeinheit ist vorgesehen, um die Daten, welche mittels der erfindungsgemäßen Vorrichtung zu der quantitativen Magnetfeldstärkenänderung ermittelt werden, entsprechend zu analysieren, so dass die gefahrene Geschwindigkeit des Fahrzeuges angegeben werden kann.

Hierfür kann die Auswerteeinheit beispielsweise die Dauer einer Magnetfeldstärkenänderung zum Bestimmen der Geschwindigkeit auswerten. Bevorzugt ist hierbei, dass die Dauer des Vorhandenseins über einen Schwellwert zum Bestimmen der Geschwindigkeit herangezogen wird. Anders ausgedrückt wird so ermittelt, wie lange der Magnet benötigt, um an einem Sensor vorbeizulaufen. Vorbeizulaufen ist so zu verstehen, dass durch die Umdrehung des Rades der Magnet an dem Sensor vorbeigeführt wird. Über die Dauer kann die Rotationsgeschwindigkeit des Magneten bestimmt werden. Im Zusammenhang mit einem bekannten Umfang des Rades kann hieraus wiederum die Geschwindigkeit ermittelt werden.

Erzeugt der Magnet für einen Weg $\Delta u$ der Magnetbahn entlang des Sensors einen Messwert oberhalb des Schwellwertes für eine Zeit $\Delta t$ (anhand der Messwerte bestimmt), so kann die Geschwindigkeit $v_S$ wie folgt berechnet werden:

$$v_S = \frac{\Delta u}{\Delta t}\frac{U_R}{U_M}$$

Mit dem Umfang der Magnetbahn $U_M$ und dem Umfang des Rades $U_R$. Diese Größen werden dem System als Parameter vorgegeben.

Ebenfalls ist es möglich, dass die Auswerteeinheit ausgebildet ist, die zeitliche Wiederholungsrate der Magnetfeldstärkenänderung zum Bestimmen der Geschwindigkeit des Fahrzeuges auszuwerten. Eine derartige Auswertung gleicht im Wesentlichen der bekannten Auswertung für Reed-Kontakte, da hier die Umdrehungsgeschwindigkeit ermittelt wird. Auch in diesem Fall ist es möglich, basierend auf diesen Daten im Zusammenhang mit dem Umfang des Rades, die gefahrene Geschwindigkeit des Fahrzeuges zu ermitteln.

Wird die Dauer einer Umdrehung mit $T$ bestimmt, berechnet sich die Geschwindigkeit $v_P$ mit:

$$v_P = \frac{U_R}{T}$$

In einer anderen Ausführungsform kann die Auswerteeinheit ausgebildet sein, den zeitlichen Abstand $t_S$ der Signale benachbarter Sensoren zum Messen einer quantitativen Magnetfeldstärke zum Bestimmen der Geschwindigkeit des Fahrzeuges zu ermitteln. Hierzu wird ebenfalls bevorzugt, diesen Abstand für einen einzustellenden Schwellwert der Magnetfeldstärke zu ermitteln. Basierend auf der Kenntnis des räumlichen Abstandes $d_S$ der beiden Sensoren zueinander kann so wiederum die Wegegeschwindigkeit des Rades ermittelt werden. Auch hier ist im Zusammenhang mit dem bekannten Umfang $U_R$ des Rades und $U_M$ der Magnetbahn ein Berechnen der Geschwindigkeit möglich.

$$v_M = \frac{d_s}{t_s} \frac{U_R}{U_M}$$

Mit dem Umfang der Magnetbahn $U_M$ und dem Umfang des Rades $U_R$. Diese Größen werden dem System als Parameter vorgegeben. Zu beachten ist, dass $t_s$ vorzeichenbehaftet ist, welches auch Drehungen des Rades in Rückwärtsrichtung detektiert.

Grundsätzlich können auch Kombinationen der beschriebenen Verfahren in der Auswerteeinheit vorgesehen sein, um die Manipulation weiter zu erschweren.

Eine weitere Möglichkeit um Manipulationen zu erkennen ist, wenn die Auswerteeinheit ausgebildet ist, den Verlauf der Magnetfeldänderung mittels eines vorgegebenen Sollverlaufes zu vergleichen. Der Sollverlauf entspricht in erster Näherung der Funktion:

$$f(t) = \frac{a}{\sqrt{1 + v_M^2 \, t^2}}$$

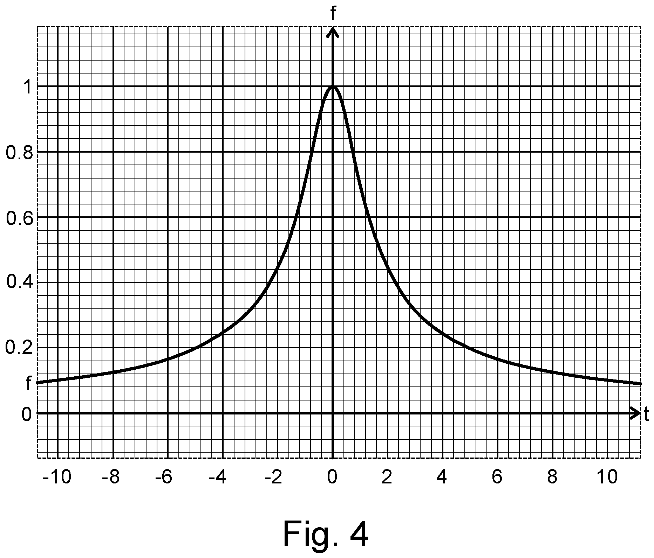

Diese Funktion ist in Fig 4 mit der der Magnetfeldstärke für a=1 und v=1 dargestellt.

Dabei gibt $a$ die Amplitude und $v_M$ die Magnetgeschwindigkeit wieder. Die Parameter $a$ und $v_M$ werden nun so bestimmt, dass der mittlere quadratische Abstand $F$ zwischen den Messwerten $s_t$ und $f(t)$ minimal ist. Anhand der Größe des mittleren quadratischen Abstandes $F$ kann so beispielsweise festgestellt werden, dass kein Magnet vorhanden ist, sondern eine Manipulationseinrichtung, die aktiv ein Magnetsignal mittels eines Elektromagneten erzeugt. Durch die Analyse des Verlaufs der Magnetfeldstärkenänderung kann dann erkannt werden, dass es eben kein vorbeigeführter Magnet ist, sondern das Magnetfeld in anderer Weise erzeugt wurde.

Um die Manipulationssicherheit weiter zu erhöhen, kann eine Datenübertragung zwischen der Vorrichtung zum Ermitteln der Daten und der Auswerteeinrichtung gesichert, insbesondere verschlüsselt, ausgebildet sein. Ebenfalls oder fakultativ kann die Auswertevorrichtung eingerichtet sein, die Datenübertragung zu einer nachgeschalteten Verarbeitungseinheit gesichert, ebenfalls insbesondere verschlüsselt, auszuführen. Eine derartige Ausführung stellt sicher, dass bei der Übertragung der Signale beziehungsweise der Daten nicht nachträglich eine Manipulation durchgeführt werden kann. Als Verschlüsselung bieten sich hierbei einfache digitale Verschlüsselungen oder dergleichen an.

Ferner betrifft die Erfindung ein Verfahren wie in Anspruch 9 definiert.

Wesentlich hierbei ist, dass von bekannten Hall-Sensoren, welche nur eine diskrete Messung eines Magnetfeldes vornehmen können, abgewichen wird und Sensoreinheiten verwendet werden, welche eine quantitative Messung einer Magnetfeldstärkenänderung durchführen können.

Im Rahmen der Erfindung wird hierunter insbesondere verstanden, dass konkret die Stärke des Magnetfeldes ermittelt wird, wobei es für die Erfindung ausreichend ist, wenn die Änderung dieser Stärke ermittelt wird. Ein reines Vorhandensein/Nichtvorhandensein ist hierbei nicht ausreichend. Eine quantitative Angabe dieser Stärke beziehungsweise Änderung ist notwendig.

Zum Bestimmen der Geschwindigkeit des Fahrzeuges kann die Dauer einer Magnetfeldstärkenänderung, insbesondere die Dauer des Vorhandenseins über einen Schwellwert ausgewertet werden. Anders ausgedrückt wird die Breite einer Amplitude einer Magnetfeldstärkenänderung analysiert. Hierüber kann die Umdrehungsgeschwindigkeit des Magneten und mit Wissen des Umfangs der Magnetbahn die des Rades ermittelt werden Basierend auf dieser Information kann im Zusammenhang mit dem bekannten Umfang des Rades so die Geschwindigkeit errechnet werden.

Alternativ oder zusätzlich kann, wenn die Sensoreinheit quantitative Messungen der Magnetfeldstärkenänderung an mindestens zwei benachbarten Orten, die in Richtung der Kreisbewegung des Magneten angeordnet sind, durchführt, der zeitliche Abstand dieser quantitativen Messungen für eine Auswertung herangezogen werden. Auch in diesem Fall kann die Umfangsgeschwindigkeit des Rades ermittelt werden und basierend auf dem Umfang wiederum die Geschwindigkeit errechnet werden.

Eine weitere Möglichkeit ist es, die zeitliche Wiederholrate der Magnetfeldstärkenänderung zum Bestimmen der Geschwindigkeit auszuwerten. Eine derartige Berechnung erfolgt analog zu bekannten Berechnungen bei Geschwindigkeitsmessungen mithilfe von Reed-Sensoren.

Um eine Manipulation zu erkennen, kann ferner der Verlauf der Magnetfeldstärkenänderung analysiert werden. Eine Analyse kann hierbei beispielsweise im Vergleich mit einem Sollverlauf erfolgen. Auch kann die Steigung der Magnetfeldstärkenänderung, deren Maximum beziehungsweise das Maximum des Magnetfeldes und deren gesamte Verlaufsform analysiert werden. Sind beispielsweise scharfe Kanten vorhanden, so ist davon auszugehen, dass das Signal nicht von einem rotierenden Magneten stammt.

Die Erfindung wird nachfolgend anhand eines Ausführungsbeispiels und schematischer Zeichnungen näher erläutert. In diesen Zeichnungen zeigen:

Fig. 1     eine stark schematische Ansicht des grundliegenden Funktionsprinzips;

Fig. 2    einen exemplarischen Signalverlauf der Magnetfeldänderung,

Fig. 3    einen vereinfachten Aufbau einer Sensoreinheit der erfindungsgemäßen Vorrichtung, und

Fig. 4    eine erwartete Kurvenform der Magnetfeldstärke.

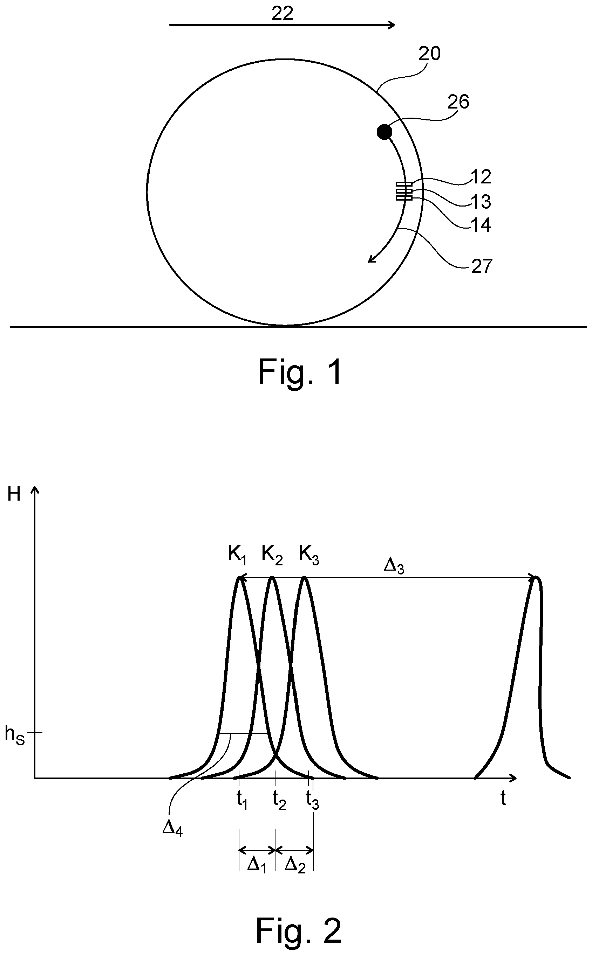

Mithilfe von Fig. 1 wird im Folgenden das grundliegende Funktionsprinzip der erfindungsgemäßen Vorrichtung erläutert.

Hierbei ist ein Rad 20 dargestellt, an dem ein Magnet 26 befestigt ist. Dieses Rad 20 ist Teil eines Fahrzeuges, welches sich in Richtung 22 bewegt. Erfindungsgemäß hat diese Bewegung in Richtung 22 zur Folge, dass der Magnet 26 eine Kreisbewegung 27 um den Mittelpunkt des Rades 20 ausführt. Auf der Bahn dieser Kreisbewegung 27 sind entsprechend der Erfindung beispielsweise drei Sensoren 12, 13, 14 angeordnet. Diese Anordnung ist in der Art, dass sich der Magnet 26 während seiner Kreisbewegung 22 sequenziell an den Sensoren 12, 13, 14 vorbeibewegt. Das Magnetfeld des Magnetes ist beim Vorbeibewegen in mehreren Sensoren gleichzeitig messbar. Bei den Sensoren 12, 13, 14 kann es sich beispielsweise um Hall-Sensoren handeln, die eine Magnetfeldstärke beziehungsweise eine Änderung des Magnetfeldes feststellen können.

Exemplarisch sind in Fig. 2 die über die Sensoren 12, 13, 14 ermittelten Daten zu dem Magnetfeld in vereinfachter Form dargestellt, wie sie ermittelt werden, wenn der Magnet 26 an den Sensoren 12, 13, 14 vorbeigeführt wird.

Auf der Ordinate ist hierbei die jeweilige Magnetfeldstärke aufgezeichnet, wohingegen die Abszisse den zeitlichen Verlauf darstellt.

In Fig. 2 sind drei Kurvenverläufe $k_1$, $k_2$, $k_3$ dargestellt, welche jeweils von den Sensoren 12, 13, 14 stammen. Wie zu sehen ist, wird durch die erfindungsgemäße hohe Abtastrate ein exakter Verlauf der Stärke des Magnetfeldes und somit auch dessen Änderung in jeder Kurve $k_1$, $k_2$, $k_3$ aufgezeigt.

Entsprechend der Erfindung können diese Daten verschieden ausgewertet werden, um die Rotationsgeschwindigkeit und damit über einen bekannten Umfang des Rades 20 auch die Geschwindigkeit des Fahrzeuges zu errechnen.

Eine Möglichkeit besteht darin, zum Ermitteln der Rotations- beziehungsweise Umfangsgeschwindigkeit des Magneten die zeitliche Ausdehnung Δ4 einer Kurve $k_1$ über einem gewissen Schwellwert $h_s$ heranzuziehen. Diese zeitliche Ausdehnung Δ4 ändert sich mit der Geschwindigkeit, mit der der Magnet an dem entsprechenden Sensor 12 vorbeigeführt wird. Anders ausgedrückt, kann die Geschwindigkeit des Magneten 26 selbst bestimmt werden. Wird dies nicht nur bei der Kurve

$k_1$ sondern auch bei den Kurven $k_2$ und $k_3$ durchgeführt, so kann eine Manipulation minimiert werden, da mehr Daten zu derselben Auswertung verwendet werden können. Auch können die Daten zu verschiedenen Schwellwerten verwendet werden.

Eine weitere Möglichkeit ist es, den zeitlichen Abstand Δ1, Δ2 bestimmter Punkte der Kurven $k_1$, $k_2$, $k_3$ auszuwerten. Auch hierüber kann auf die Geschwindigkeit des Magneten 26 an dem Rad 20 geschlossen werden.

In einer weiteren Ausführung ist es möglich, den zeitlichen Abstand Δ3 zwischen zwei Maxima derselben Kurve $k_1$ zu ermitteln. Hierüber kann die Zeit bestimmt werden, die benötigt wird, damit der Magnet einmal erneut an demselben Sensor 12 vorbeigeführt wird. Mittels dieser Zeit ist es möglich, im Zusammenhang mit einem bekannten Umfang des Rades 20 die Geschwindigkeit ebenfalls zu ermitteln.

Selbstverständlich kann auch eine Kombination der hier beschriebenen Auswertungen ausgeführt werden. Dies ist bevorzugt, um den Manipulationsschutz zu erhöhen.

Eine weitere Möglichkeit eine Manipulation festzustellen ist es, auch den Kurvenverlauf selbst auszuwerten. Hierbei kann beispielsweise die Kontinuität des Kurvenverlaufes, die jeweilige Steigung, ein Vergleich der Steigung verschiedener Kurven $k_1$, $k_2$, $k_3$ miteinander aber auch der Abgleich mit einem idealen Soll-Kurvenwert angeführt werden.

Auf diese Weise können viele Manipulationen beispielsweise mit Elektromagneten, die den Magneten 26 ersetzen, oder anderen künstlichen Magnetfeldern erkannt werden.

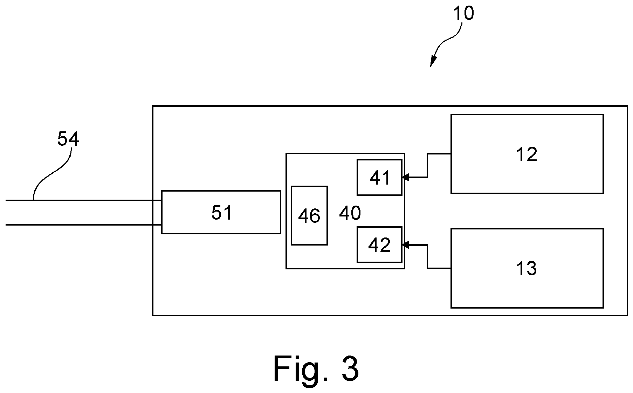

Im Weiteren wird unter Bezugnahme auf Fig. 3 eine sehr vereinfachte Darstellung einer erfindungsgemäßen Sensoreinheit beschrieben.

Die hier dargestellte Sensoreinheit 10 weist zwei Sensoren 12 und 13 auf. Zentral an der Sensoreinheit 10 ist der Mikroprozessor 40, der zwei A/D-Wandler 41 und 42 aufweist, angeordnet. Diese dienen dazu, die Signale, welche von den beiden Sensoren 12, 13, die als Hall-Sensoren ausgeführt sind, zu digitalisieren. Ferner weist der Mikroprozessor 40 einen Ein- und Ausgang 46 auf, welcher mit einer entsprechenden Schnittstelle 51 gekoppelt ist. Die Schnittstelle 51 ist mit einer 2-Drahtleitung 54 verbunden, welche zum einen zur Energieversorgung und zum anderen auch zur Signalübertragung für die Sensoreinheit 10 dient.

In dem Mikroprozessor 40 können einerseits die zuvor beschriebenen Auswertungen für die Geschwindigkeit durchgeführt werden. Andererseits ist es aber auch möglich, lediglich die Daten zu digitalisieren, in gewisser Weise aufzubereiten und über die Schnittstellen 46, 51 über die 2-Drahtleitung 54 an eine nachgeschaltete Auswerteeinheit zu übertragen.

Um diese Datenübertragung weiter abzusichern, kann es vorgesehen sein, diese Übertragung über die 2-Drahtleitung 54 beispielsweise verschlüsselt oder in einer anderen Art codiert durchzuführen, so dass die Signale auf der Leitung selbst nicht ausgetauscht werden können.

So ist es mit der erfindungsgemäßen Vorrichtung und dem erfindungsgemäßen Verfahren zum Ermitteln von Daten zum Bestimmen einer Geschwindigkeit eines Fahrzeuges möglich, diese Daten derart zu ermitteln, dass eine Manipulation weitgehend ausgeschlossen werden kann.

**Patentansprüche**

1. Fahrzeug, insbesondere Fahrrad, mit einem Rad (20) und mit einer Vorrichtung zum Ermitteln von Daten zum Bestimmen einer Geschwindigkeit des Fahrzeuges,
   wobei die Vorrichtung aufweist:

   einen Magneten (26), der an dem Rad (20) angebracht ist und bei Rotation des Rades (20) eine Kreisbewegung durchführt, eine Sensoreinheit (10) zum Aufnehmen von Signalen, bedingt durch die Kreisbewegung des Magneten, wobei die Sensoreinheit (10) an einem Bauteil des Fahrzeuges befestig ist, an dem sich im Betrieb der Magnet (26) vorbei bewegt,
   **dadurch gekennzeichnet,**
   **dass** der Sensor (12, 13, 14) eingerichtet ist, das Magnetfeld oder die Magnetfeldstärkenänderung mit einer Tastfrequenz von mindestens 200 Hz abzutasten,
   **dass** die Sensoreinheit (10) mindestens zwei Sensoren (12, 13, 14) zum Messen einer Magnetfeldstärke und/oder einer Magnetfeldstärkenänderung aufweist, und
   **dass** die mindestens zwei Sensoren (12, 13, 14) zum Messen einer Magnetfeldstärke und/oder einer Magnetfeldstärkenänderung in einem vorgegebenen Abstand $d_s$ in Richtung der Kreisbewegung (22) des Magneten (26) benachbart zueinander so angeordnet sind, dass der Magnet bei seiner Kreisbewegung sequenziell an den Sensoren vorbeibewegt wird.

2. Fahrzeug Anspruch 1,
   **dadurch gekennzeichnet,**
   **dass** der oder die Sensoren (12, 13, 14) zum Messen einer Magnetfeldstärke und/oder einer Magnetfeldstärkenänderung Hall-Sensoren sind.

3. Fahrzeug nach Anspruch 1 oder 2 des Weiteren aufweisend eine Auswertevorrichtung,
   die dazu eingerichtet ist mittels der Vorrichtung die Geschwindigkeit des Fahrzeuges basierend auf Daten ($k_1$, $k_2$ $k_3$) einer Magnetfeldstärke und/oder Magnetfeldstärkenänderung zu bestimmen.

4. Fahrzeug nach Anspruch 3,
   **dadurch gekennzeichnet,**
   **dass** die Auswerteeinheit zum Analysieren der Dauer $\Delta 4$ einer Magnetfeldstärkenänderung, insbesondere der Dauer des Vorhandenseins über einem Schwellwert ($h_s$), zum Bestimmen der Geschwindigkeit ausgebildet ist.

5. Fahrzeug nach Anspruch 3 oder 4,
   **dadurch gekennzeichnet,**
   **dass** die Auswerteeinheit zum Analysieren des zeitlichen Abstandes der Daten $\Delta 1$, $\Delta 2$ zweier benachbarter Sensoren zum Messen einer Magnetfeldstärke und/oder einer Magnetfeldstärkenänderung zum Bestimmen der Geschwindigkeit des Fahrzeuges ausgebildet ist.

6. Fahrzeug nach einem der Ansprüche 3 bis 5,
   **dadurch gekennzeichnet,**
   **dass** die Auswerteeinheit ausgebildet ist, die zeitliche Wiederholrate der Magnetfeldstärkenänderung zum Bestimmen der Geschwindigkeit des Fahrzeuges auszuwerten.

7. Fahrzeug nach einem der Ansprüche 3 bis 6,
   **dadurch gekennzeichnet,**
   **dass** die Auswerteeinheit ausgebildet ist, den Verlauf ($k_1$, $k_2$ $k_3$) der Magnetfeldstärkenänderung mittels einem vorgegebenen Sollverlauf zu vergleichen, um Manipulation zu erkennen.

8. Fahrzeug nach einem der Ansprüche 3 bis 7,
   **dadurch gekennzeichnet,**

   **dass** eine Datenübertragung zwischen der Vorrichtung zum Ermitteln der Daten und der Auswertevorrichtung gesichert, insbesondere verschlüsselt, ausgebildet ist und/oder
   **dass** die Auswertevorrichtung eingerichtet ist, eine Datenübertragung zu einer nachgeschalteten Verarbeitungseinheit gesichert, insbesondere verschlüsselt, auszuführen.

9. Verfahren zum Ermitteln von Daten zum Bestimmen einer Geschwindigkeit eines Fahrzeuges, insbesondere eines Fahrrades,

   bei dem ein Magnet (26) an einem Rad (20) angebracht wird, um bei Rotation des Rades (20) eine Kreisbewegung (22) auszuführen, wobei eine Sensoreinheit (10) zum Aufnehmen von Signalen, bedingt durch die Kreisbewegung (22) des Magneten (26), an einem Bauteil des Fahrzeuges befestigt wird, an dem sich im Betrieb der Magnet (26) vorbeibewegt, wobei mittels der Sensoreinheit (10) eine Messung der Magnetfeldstärke und/oder der Magnetfeldstärkenänderung durchgeführt wird **da-**

**durch gekennzeichnet,**

**dass** die Messung mit einer Tastfrequenz von mindestens 200 Hz durchgeführt wird,

**dass** eine Sensoreinheit (10) gewählt wird, die mindestens zwei Sensoren (12, 13, 14) zum Messen einer Magnetfeldstärke und/oder einer Magnetfeldstärkenänderung aufweist, und

**dass** die mindestens zwei Sensoren (12, 13, 14) zum Messen einer Magnetfeldstärke und/oder einer Magnetfeldstärkenänderung in einem vorgegeben Abstand $d_s$ in Richtung der Kreisbewegung (22) des Magneten (26), wenn dieser an dem Rad (20) angebracht ist, benachbart zueinander so angeordnet werden, dass der Magnet bei seiner Kreisbewegung sequenziell an den Sensoren vorbeibewegt wird.

10. Verfahren nach Anspruch 9,
**dadurch gekennzeichnet,**
**dass** zum Bestimmen der Geschwindigkeit des Fahrzeuges die Dauer einer Magnetfeldstärkenänderung, insbesondere die Dauer $\Delta4$ des Vorhandenseins über einem Schwellwert ($h_s$), ausgewertet wird.

11. Verfahren nach Anspruch 9 oder 10,
**dadurch gekennzeichnet,**
**dass** die Sensoreinheit (10) mindestens zwei Messungen der Magnetfeldstärke und/oder der Magnetfeldstärkenänderung an benachbarten Orten, die in Richtung der Kreisbewegung (22) des Magneten (26) angeordnet sind, durchführt und dass zum Bestimmen der Geschwindigkeit des Fahrzeuges der zeitliche Abstand $\Delta1$, $\Delta2$ der mindestens zwei Messungen einer Magnetfeldstärke und/oder der Magnetfeldstärkenänderung ausgewertet wird.

12. Verfahren nach einem der Ansprüche 9 bis 11,
**dadurch gekennzeichnet,**
**dass** die zeitliche Wiederholrate der Magnetfeldstärkenänderung zum Bestimmen der Geschwindigkeit ausgewertet wird.

13. Verfahren nach einem der Ansprüche 9 bis 12,
**dadurch gekennzeichnet,**
**dass** der Verlauf der Magnetfeldstärkenänderung zum Erkennen einer Manipulation analysiert wird.

**Claims**

1. Vehicle, in particular bicycle, having a wheel (20) and a device for ascertaining data for determining a velocity of the vehicle,
wherein the device comprises:

a magnet (26), which is attached to the wheel (20) and carries out a circular movement upon rotation of the wheel (20),

a sensor unit (10) for recording signals, caused by the circular movement of the magnet, wherein the sensor unit (10) is fastened on a component of the vehicle past which the magnet (26) moves in the operation,

**characterized**

**in that** the sensor (12, 13, 14) is configured to sample the magnetic field or the magnetic field strength change at a sampling frequency of at least 200 Hz,

**in that** the sensor unit (10) comprises at least two sensors (12, 13, 14) for measuring a magnetic field strength and/or a magnetic field strength change, and

**in that** the at least two sensors (12, 13, 14) for measuring a magnetic field strength and/or a magnetic field strength change are arranged in the direction of the circular movement (22) of the magnet (26) in a given distance $d_s$ and adjacent to each other in such a way that the magnet is sequentially moved past the sensors during its circular motion.

2. Vehicle according to Claim 1,
**characterized**
**in that** the sensor or sensors (12, 13, 14) for measuring a magnetic field strength and/or a magnetic field strength change is/are Hall sensors.

3. Vehicle according to Claim 1 or 2
further comprising an evaluation device that is configured, by means of the device, to determine the velocity of the vehicle based on data ($k_1$, $k_2$ $k_3$) of a magnetic field strength and/or a magnetic field strength change.

4. Vehicle according to Claim 3,
**characterized**
**in that** the evaluation unit is designed to analyse the duration $\Delta4$ of a magnetic field strength change, in particular the duration of the presence above a threshold value ($h_s$), to determine the velocity.

5. Vehicle according to Claim 3 or 4,
**characterized**
**in that** the evaluation unit is designed to analyse the time interval of the data $\Delta1$, $\Delta2$ of two adjacent sensors to measure a magnetic field strength and/or a magnetic field strength change to determine the velocity of the vehicle.

6. Vehicle according to any one of Claims 3 to 5,
**characterized**
**in that** the evaluation unit is designed to evaluate the chronological repetition rate of the magnetic field strength change to determine the velocity of the vehicle.

**7.** Vehicle according to any one of Claims 3 to 6, **characterized** **in that** the evaluation unit is designed to compare the profile ($k_1$, $k_2$ $k_3$) of the magnetic field strength change by means of a predefined target profile to detect manipulations.

**8.** Vehicle according to any one of Claims 3 to 7, **characterized**

**in that** a data transfer between the device for ascertaining the data and the evaluation device is designed to be secured, in particular encrypted, and/or

**in that** the evaluation device is configured to execute a data transfer to a downstream processing unit in a secured, in particular encrypted manner.

**9.** Method for ascertaining data for determining a velocity of a vehicle, in particular a bicycle,

in which a magnet (26) is attached to a wheel (20) to execute a circular movement (22) during rotation of the wheel (20),

wherein a sensor unit (10) for recording signals, caused by the circular movement (22) of the magnet (26), is fastened on a component of the vehicle, past which the magnet (26) moves in operation,

wherein a magnetic field strength and/or a measurement of the magnetic field strength change is carried out by means of the sensor unit (10),

**characterized**

**in that** the measurement is carried out at a sampling frequency of at least 200 Hz, in that as sensor unit (10) is chosen comprising at least two sensors (12, 13, 14) for measuring a magnetic field strength and/or a magnetic field strength change, and

**in that** the at least two sensors (12, 13, 14) for measuring a magnetic field strength and/or a magnetic field strength change are arranged in the direction of the circular movement (22) of the magnet (26) in a given distance $d_s$ when it is attached to the wheel (20), adjacent to each other in such a way that the magnet is sequentially moved past the sensors during its circular motion.

**10.** Method according to Claim 9, **characterized** **in that**, to determine the velocity of the vehicle, the duration of a magnetic field strength change, in particular the duration $\Delta 4$ of the presence above a threshold value ($h_s$), is evaluated.

**11.** Method according to Claim 9 or 10, **characterized**

**in that** the sensor unit (10) carries out at least two measurements of the magnetic field strength and/or the magnetic field strength change at adjacent locations, which are arranged in the direction of the circular movement (22) of the magnet (26), and

**in that**, to determine the velocity of the vehicle, the time interval $\Delta 1$, $\Delta 2$ of the at least two measurements of a magnetic field strength and/or the magnetic field strength change is evaluated.

**12.** Method according to any one of Claims 9 to 11, **characterized** **in that** the chronological repetition rate of the magnetic field strength change is evaluated to determine the velocity.

**13.** Method according to any one of Claims 9 to 12, **characterized** **in that** the profile of the magnetic field strength change is analysed to recognize a manipulation.

**Revendications**

**1.** Véhicule, en particulier bicyclette, avec une roue (20) et avec un dispositif destiné à déterminer des données pour définir une vitesse du véhicule, dans lequel le dispositif présente :

un aimant (26), qui est installé sur la roue (20) et exécute un déplacement circulaire lors de la rotation de la roue (20),

une unité à capteurs (10) destiné à recevoir des signaux, du fait du déplacement circulaire de l'aimant, dans lequel l'unité à capteurs (10) est fixée sur un composant du véhicule, devant lequel l'aimant (26) passe, en fonctionnement, **caractérisé en ce**

**que** le capteur (12, 13, 14) est configuré pour balayer le champ magnétique ou la variation d'intensité de champ magnétique avec une fréquence de balayage d'au moins 200 Hz,

**que** l'unité à capteurs (10) présente au moins deux capteurs (12, 13, 14) destinés à mesurer une intensité de champ magnétique et/ou une variation d'intensité de champ magnétique, et

**que** les au moins deux capteurs (12, 13, 14) sont disposés de manière adjacente l'un par rapport à l'autre pour mesurer une intensité de champ magnétique et/ou une variation d'intensité de champ magnétique avec un espacement prédéfini $d_s$ dans la direction du déplacement circulaire (22) de l'aimant (26) de telle sorte que l'aimant passe devant les capteurs de manière séquentielle lors de son déplacement circulaire.

2. Véhicule selon la revendication 1,
   **caractérisé en ce**
   **que** le ou les capteurs (12, 13, 14) destinés à mesurer une intensité de champ magnétique et/ou une variation d'intensité de champ magnétique sont des capteurs à effet Hall.

3. Véhicule selon la revendication 1 ou 2, présentant par ailleurs un dispositif d'évaluation, qui est configuré pour définir au moyen du dispositif la vitesse du véhicule sur la base de données ($k_1$, $k_2$, $k_3$) d'une intensité de champ magnétique et/ou d'une variation d'intensité de champ magnétique.

4. Véhicule selon la revendication 3,
   **caractérisé en ce**
   **que** l'unité d'évaluation est réalisée pour analyser la durée $\Delta 4$ d'une variation d'intensité de champ magnétique, en particulier la durée de la présence au-dessus d'une valeur de seuil ($h_s$) pour définir la vitesse.

5. Véhicule selon la revendication 3 ou 4,
   **caractérisé en ce**
   **que** l'unité d'évaluation est réalisée pour analyser l'espacement dans le temps des données $\Delta 1$, $\Delta 2$ de deux capteurs adjacents pour mesurer une intensité de champ magnétique et/ou une variation d'intensité de champ magnétique pour définir la vitesse du véhicule.

6. Véhicule selon l'une quelconque des revendications 3 à 5,
   **caractérisé en ce**
   **que** l'unité d'évaluation est réalisée pour évaluer le taux de répétition temporel de la variation d'intensité de champ magnétique pour définir la vitesse du véhicule.

7. Véhicule selon l'une quelconque des revendications 3 à 6,
   **caractérisé en ce**
   **que** l'unité d'évaluation est réalisée pour comparer le profil ($k_1$, $k_2$, $k_3$) de la variation d'intensité de champ magnétique au moyen d'un profil de consigne prédéfini pour identifier toute manipulation.

8. Véhicule selon l'une quelconque des revendications 3 à 7,
   **caractérisé en ce**

   **qu'**une transmission de données entre le dispositif de détermination des données et le dispositif d'évaluation est réalisée de manière sécurisée, en particulier de manière chiffrée, et/ou
   **que** le dispositif d'évaluation est mis au point pour exécuter une transmission de données à une unité de traitement montée en aval de manière sécurisée, en particulier de manière chiffrée.

9. Procédé de détermination de données pour définir une vitesse d'un véhicule, en particulier d'une bicyclette,

   où un aimant (26) est installé sur une roue (20) pour exécuter un déplacement circulaire (22) lors de la rotation de la roue (20),
   dans lequel une unité à capteurs (10) destinée à recevoir des signaux du fait du déplacement circulaire (22) de l'aimant (26), , est fixée sur un composant du véhicule, devant lequel l'aimant (26) passe, en fonctionnement,
   dans lequel une mesure de l'intensité de champ magnétique et/ou de la variation de l'intensité de champ magnétique est effectuée au moyen de l'unité à capteurs (10),
   **caractérisé en ce**
   **que** la mesure est effectuée avec une fréquence de balayage d'au moins 200 Hz,
   **qu'**une unité à capteurs (10) est choisie, laquelle présente au moins deux capteurs (12, 13, 14) destinés à mesurer une intensité de champ magnétique et/ou une variation d'intensité de champ magnétique, et
   **que** les au moins deux capteurs (12, 13, 14) destinés à mesurer une intensité de champ magnétique et/ou une variation d'intensité de champ magnétique sont disposés de manière adjacente l'un par rapport à l'autre avec un espacement $d_s$ prédéfini dans la direction du déplacement circulaire (22) de l'aimant (26), lorsque celui-ci est installé sur la roue (20) de telle sorte que l'aimant est déplacé de manière séquentielle devant les capteurs, lors de son déplacement circulaire.

10. Procédé selon la revendication 9,
    **caractérisé en ce**
    **que** pour définir la vitesse du véhicule, la durée d'une variation d'intensité de champ magnétique, en particulier la durée $\Delta 4$ de la présence au-dessus d'une valeur de seuil ($h_s$), est évaluée.

11. Procédé selon la revendication 9 ou 10,
    **caractérisé en ce**
    **que** l'unité à capteurs (10) effectue au moins deux mesures de l'intensité de champ magnétique et/ou de la variation d'intensité de champ magnétique à des emplacements adjacents, qui sont disposés en direction du déplacement circulaire (22) de l'aimant (26), et que pour définir la vitesse du véhicule, l'espacement dans le temps $\Delta 1$, $\Delta 2$ des au moins deux mesures de l'intensité de champ magnétique et/ou de la variation d'intensité de champ magnétique est évaluée.

12. Procédé selon l'une quelconque des revendications 9 à 11,
**caractérisé en ce
que** le taux de répétition temporel de la variation d'intensité de champ magnétique est évalué pour définir la vitesse.

13. Procédé selon l'une quelconque des revendications 9 à 12,
**caractérisé en ce
que** le profil de la variation de champ magnétique est analysé pour identifier une manipulation.

Fig. 1

Fig. 2

10

54

51 46 40 41 12

42 13

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3435094 A
- JP 2014160009 A
- US 9267800 B2
- US 4967153 A
- EP 2073022 B1